# EUROPEAN PATENT SPECIFICATION

(11) **EP 4 082 948 B1**
(45) Date of publication and mention of the grant of the patent: **14.10.2026**
(21) Application number: 21275082.2
(22) Date of filing: 15.06.2021
(51) Int. Cl.: B65G 65/48

(54) **DISCHARGE MEANS FOR DISPENSING APPARATUS**
AUSTRAGSMITTEL FÜR EINE ABGABEVORRICHTUNG
MOYEN D'ÉVACUATION POUR APPAREIL DE DISTRIBUTION

(30) Priority: 27.04.2021 GB 202106021
(43) Date of publication of application: 02.11.2022
(73) Proprietor: Dinnissen B.V., 5975 NB Sevenum (NL)
(72) Inventor: COOK, Dennis, Malton, YO17 8PZ (GB)
(74) Representative: Tomkinson, Alexandra

(56) References cited:
- GB-A- 2 377 432
- JP-A- S55 119 633

## Description

The present invention relates to discharge means for dispensing apparatus and to a method of use thereof.

Although the following description refers almost exclusively to discharge means for dispensing apparatus in the form of a silo, it will be appreciated by persons skilled in the art that the dispensing apparatus could be any dispensing apparatus for dispensing any one or more items or material therefrom and is not just limited to a silo. For example, the dispensing apparatus could be a hopper, a storage reservoir and/or the like.

Discharge means according to the preamble of claim 1 and a method of using discharge means according to the preamble of claim 13 are disclosed in GB2377432. A silo is typically used to store freely flowable and pulverulent material, such as a powder or granular material. The discharge means for the silo comprises an entry chamber which is in communication with the silo interior. A directing member is rotatably mounted in the entry chamber for rotary motion about a vertical axis to direct flowable material in the entry chamber through a discharge passage in a bottom wall of the chamber. The directing member comprises an obstructing member having an upwardly extending wall with at least one opening therein. An arm or scoop is associated with the at least one opening and extends radially outwardly. On rotation of the directing member, the arm is adapted to engage flowable material in the entry chamber and direct the flowable material in a path towards the discharge passage in the bottom wall of the entry chamber through the at least one opening. The arm is pivotally connected to the obstructing member and is movable between an open position, wherein the flowable material is directed along the path, and a closed position, wherein the flowable material is not directed along the path and the arm closes the at least one opening.

In the above described design, the pivotally connected arms or scoops are moved between the open and closed position by forces imparted by the flowable material within the entry chamber due to the relative motion of the arms when the directing member rotates. However, a problem with this conventional design is that when pulverulent material of low density is to be dispensed from the silo, the forces imparted by the material can be insufficient to reliably initiate movement of the arms between the open and closed positions.

It is therefore an aim of the present invention to provide discharge means that overcomes the abovementioned problem.

It is a further aim of the present invention to provide a method of using discharge means that overcomes the abovementioned problem.

It is a yet further aim of the present invention to provide dispensing apparatus including discharge means that overcomes the abovementioned problem.

It is a yet further aim of the present invention to provide a method of using dispensing apparatus including discharge means that overcomes the abovementioned problem.

According to a first aspect of the present invention there is provided discharge means for use in or with dispensing apparatus according to claim 1.

The resilient biasing means of the present invention help to ensure there is sufficient force applied to the closure means to reliably move the closure means from the closed position to the open position in use, at least in the initial stages of opening, and particularly, although not necessarily exclusively, when the one or more items or material being dispensed in use may create insufficient force to reliably move the closure means directly from the closed position to the open position.

Preferably the resilient biasing means are any biasing means able to impart sufficient biasing force on the closure means to help move the closure means to an open position in use but still allowing the closure means to be moved to a closed position when required.

Preferably the biasing force imparted by the resilient biasing means on the closure means is such so as to generate a moment applied to the closure means proportional to approximately 3-5% of the torque or force generated or required for rotating or moving the directing means in use respectively.

Preferably the biasing force imparted by the resilient biasing means is sufficient to allow the closure means to be movable to an open position when the directing means is moved in a first direction but allow the closure means to be movable to a closed position when the directing means is moved in a second direction.

Preferably the second direction is typically the reverse or opposite of the first direction. For example, the first direction can be rotatable movement of the directing means in a clockwise direction and the second direction can be rotatable movement of the directing means in an anti-clockwise direction.

Preferably a force imparted by movement of one or more items or material against an outer surface of the closure means is sufficient to move the closure means from the open position to the closed position in use.

In one embodiment the resilient biasing means can include any or any combination of one or more members capable of providing a resilient biasing force; one or more springs, spring members, hair pin springs, leaf springs, coiled springs and/or the like.

Preferably the resilient biasing means is made from spring steel.

In one embodiment the resilient biasing means includes a curved portion, convexed portion, partial circle portion or partial loop portion. This typically provides the resilient biasing means with greater flexion to allow a greater force to be imparted by the resilient biasing means on the closure means over a greater distance compared to if the portion was not present.

In one embodiment the resilient biasing means is at least partially or wholly linear in form.

In one embodiment the resilient biasing means includes a curved portion, convexed portion, partial circle portion or partial loop portion, and a linear or substantially linear portion.

Preferably the curved portion, convexed portion, partial circle portion or partial loop portion is provided at or towards a first end of the resilient biasing means, and the linear or substantially linear portion is provided at or towards a second end of the resilient biasing means.

Preferably a first end of the resilient biasing means is further from a free end of the closure means and the second end of the resilient biasing means is closer to the free end of the closure means.

According to the invention the closure means is pivotably mounted to the directing means via pivot means at the first end of the closure means.

In one embodiment a first end of the resilient biasing means is provided at, adjacent to, towards or associated with a first end of the closure means or a bracket means to which the first end of the closure means is attached or mounted to the directing means.

Preferably a second end of the resilient biasing means is provided a spaced distance apart from the first end of the resilient biasing means, and further preferably the second end is provided at, adjacent to, towards or associated with a second or free end of the closure means.

Preferably at least part of the resilient biasing means, and further preferably the second end of the resilient biasing means, is arranged to engage with an inwardly facing surface of the closure means.

In one embodiment the second end of the resilient biasing means engages with the closure means at least when in the closure means is in the closed position and for at least the initial stage of opening of the closure means.

In one embodiment, once the resilient biasing means has provided an initial biasing force to the closure means to start opening of the closure means (i.e. to start the closure means from moving from the closed position to the open position), the second end of the resilient biasing means disengages with the closure means and the force of the one or more items moving against the arm means in use continues to move the closure means to the fully open position. The second end of the resilient biasing means typically re-engages with the closure means as the closure means moves from the open position to the closed position.

In one embodiment the resilient biasing means are provided on or associated with a bracket means or member that is a spaced distance apart from the closure means. For example, the bracket means could be provided on or associated with an upstanding wall portion of the directing means.

In one embodiment the first end of the resilient biasing means is attached to the closure means or a bracket means of the closure means via attachment means.

Preferably the attachment means includes any or any combination of one or more members which allows attachment between the resilient biasing means and the closure means or bracket means, adhesive, welding, of one or more clamping members, clamping shells, apertures, recesses, inter-engaging members, screws, clips, nut and bolts and/or the like.

In one embodiment the resilient biasing means can be retrofitted to an closure means of existing discharge means or discharge apparatus, such as the arm members of the apparatus disclosed in GB2377432.

Preferably the second end of the resilient biasing means engages with a part of the closure means a spaced distance apart from a pivot axis or pivot means via which the closure means is attached to the directing means, and said distance is sufficient to create a turning movement of the closure means in use, at least in the initial stages of opening of the closure means.

In one embodiment a first end of the resilient biasing means is joined to or associated with a first inner end or surface of the closure means . Preferably a second end of the resilient biasing means is joined to or associated with a second inner end or surface of the closure means.

Preferably the closure means is attached to the directing means, and further preferably an upstanding wall member of the directing means via bracket means and the first end of the resilient biasing means is joined to or associated with the bracket means.

Preferably the material being dispensed is or includes any or any combination of flowable material, such as for example a powder, granular material, particulate material, grain, cement, chemicals, animal feed, sand, soil, calcium carbonate, chalk; silicate material such as for example hydrated aluminium silicate, amorphous fumed silica, sodium alumino silicate; resins and/or the like.

Preferably the material being dispensed includes flowable material having a density equal to or less than 300Kg/m³.

Preferably the entry chamber is adapted to be in communication with, associated with or mountable in discharge apparatus, and further preferably in communication with, associated with or mountable in an interior of the discharge apparatus.

Preferably the dispensing apparatus is or includes a silo, hopper, storage reservoir and/or the like.

In one embodiment the directing means is in the form of a directing chamber. The directing chamber is mounted in the entry chamber such that the directing chamber forms a sub-chamber or sub-compartment within the entry chamber.

One or more items or material in the entry chamber move from the exterior of the directing chamber to the interior of the directing chamber via the one or more openings.

Preferably the at least one discharge outlet is located within the directing means or chamber, which in turn is within the entry chamber.

Preferably the directing means is arranged to be rotatably mounted about a vertical axis in use. As such, the directing means typically rotates in a horizontal or substantially horizonal plane in use.

In one embodiment a drive means or mechanism is provided on or associated with the directing means for driving movement or rotation of the directing means in use.

Preferably the drive means or mechanism is or includes any or any combination of a motor, electric motor, gearing, gearbox and/or the like.

Preferably the drive means or mechanism includes a drive shaft that is joined to associated with the directing means for driving movement or rotation of the directing means in use.

Preferably the drive means or mechanism is arranged to move or rotate the directing means in a first direction or clockwise direction and a second direction or anti-clockwise direction in use (i.e. when operational). Movement of the drive means or mechanism and directing means in the first or clockwise direction typically moves the closure means to the open position. Movement of the drive means and directing means in the second or anti-clockwise direction typically moves the closure means to the closed position.

Preferably when the directing means is not moving (i.e. when non-operational), the closure means remains in the last position it was used in when last operational.

The directing means is arranged such that one or more items or material can move from the exterior of the directing means to the interior of the directing means via the at least one opening when the directing means are moved, and preferably moved in the first direction, in use.

Preferably the at least one discharge outlet is in the form of any or any combination of an aperture, a passage, a channel, a sleeve, a valve, an actuatable vale, a dome valve, a butterfly valve and/or the like.

Preferably the at least one discharge outlet is located or defined in a bottom wall of the entry chamber.

Typically the at least one discharge outlet is located directly below the directing means (and preferably within the boundary of the directing means) in the entry chamber so that the one or more items or material entering the directing means via the opening can then move into or towards the at least one discharge outlet in use.

Preferably the directing means is any member or device capable of directing the one or more items or material in the entry chamber towards and through the discharge outlet in use.

In one embodiment the directing means includes a directing chamber or an obstructing member.

Preferably the directing chamber or obstructing member has or includes an upwardly extending wall or walls.

Further preferably the directing chamber or obstructing member has a cone portion on top of the upwardly extending wall or walls (i.e. on an end of the upwardly extending wall opposite to the end of the wall adjacent a base of the entry chamber). In this arrangement, the obstructing member is typically frusto-conical in shape.

Further preferably the at least one opening is defined in the upwardly extending wall or walls.

Preferably the closure means is any device or member able to move between the open and closed positions with respect to the at least one opening in use.

In one embodiment the closure means includes or consists of at least one arm member, a scoop member and/or the like.

Preferably the closure means has at least an outer surface and an inner surface. Preferably the closure means has an end or part which protrudes outwardly of the at least one opening of the directing means when in the closed position.

The closure means has the first end pivotably attached, directly or indirectly, to the directing means or upwardly extending wall of the directing means.

Preferably a second end of the closure means is arranged to project or protrude further outwardly of the axis of rotation of the directing means than the first end of the closure means, and further preferably radially further outwardly of the axis of rotation of the directing means.

Preferably the closure means are arranged to engage the one or more items in the entry chamber and direct the items in a path that has a radially inward component towards the discharge outlet through the at least one opening of the directing means. Preferably the closure means is provided on, connected to or associated with the upwardly extending wall of the directing means.

According to the invention the closure means is pivotally connected, directly or indirectly, to the directing means.

Preferably the closure means pivots about the pivot means or hinge means in moving between the open and closed positions in use.

Preferably, with the closure means in the open position, the one or more items are movable along the path having the radially inward component or can be moved through the at least one opening.

Preferably, with the closure means in the closed position, the one or more items are not movable along the path having the radially inward component or cannot be moved through the at least one opening.

In one embodiment the closure means includes a lip portion having a surface which extends outwardly of the upwardly extending wall.

Preferably the lip portion is provided at the second end of the closure means.

Preferably the lip portion is adapted to engage one or more items in the entry chamber on rotation of the directing means in a first direction, thereby causing the closure means to move outwardly of the directing means, and preferably pivotably move, from the closed position to the open position.

Preferably the outer surface of the closure means, when the closure means is in an open position, faces in a reverse direction to the first direction of movement of the directing means. The closure means are adapted such that on rotation of the directing means in the reverse direction, it engages with the one or more items in the entry chamber to move the closure means, and preferably pivotably move, from the open position to the closed position.

Preferably, on movement of the directing means in the reverse direction, the outer surface of the closure means faces the direction of movement of the directing means.

In one embodiment two closure means are provided and each closure means has an associated opening defined in the directing means.

Preferably the two or more closure means are provided in diametrically opposed position on the directing means or upwardly extending wall thereof.

In one embodiment the directing means is provided with one or more carrier vanes, whereby the one or more items or material which have passed through the openings into the interior of the directing means can be transferred to the at least one discharge outlet by the carrier vanes. Thus, the carrier vanes help to push or carry the one or more items or material from the interior of the directing means to the at least one dispensing outlet.

Preferably each carrier vane includes a blade protruding radially inwardly from the upstanding wall of the directing means/obstructing member.

Preferably at least one set of a plurality blades are provided, the blades of each set being of progressively greater radial length in the first direction of rotation of the directing means.

Preferably the blades are located a spaced distance apart on an interior wall or the upstanding wall of the directing means.

In one embodiment each set of blades comprises two or three blades provided between the pivotal axis of the arm means and the next opening.

Preferably each blade increases in length by equal or substantially equal increments.

Preferably the blades or carrier vanes are made from spring steel, whereby the blades or vanes can deflect from and return to their original position to prevent over-compaction of the one or more items or product degradation of the one or more items in the event the discharge outlet is blocked or obstructed.

In one example the entry chamber of the dispensing means includes a frusto-conical portion or a portion having a narrowing taper towards a lower end thereof, and a plate portion provided at the lower end of the portion or frusto-conical portion. Preferably there are two or more discharge outlets provided in the entry chamber. Further preferably there are four discharge outlets provided in the entry chamber. Preferably the two or more discharge outlets are provided a spaced distance apart, and further preferably equi-distant apart in the entry chamber.

Preferably the at least one dispensing outlet is provided in a base wall of the entry chamber.

In one embodiment the directing means are provided centrally or substantially centrally of the entry chamber and above the base wall of the entry chamber.

In one embodiment the discharge means is any mechanism that allows discharge of one or more items or material from dispensing apparatus in use.

According to a second aspect of the present invention there is provided a method of using discharge means according to claim 13
According to a further embodiment of the present invention there is provided dispensing apparatus including discharge means.

Preferably the dispensing apparatus is or includes a silo, hopper, storage reservoir and/or the like.

In one embodiment the dispensing apparatus includes a storage reservoir supported on support means.

Preferably the support means includes a frame, one or more support legs and/or the like.

According to a yet further embodiment of the present invention there is provided a method of using dispensing apparatus including discharge means.

Embodiments of the present invention will now be described with reference to the following figures, wherein:
Figure 1 is an example of dispensing apparatus in the form of a silo in which the dispensing means according to the present invention can be provided;

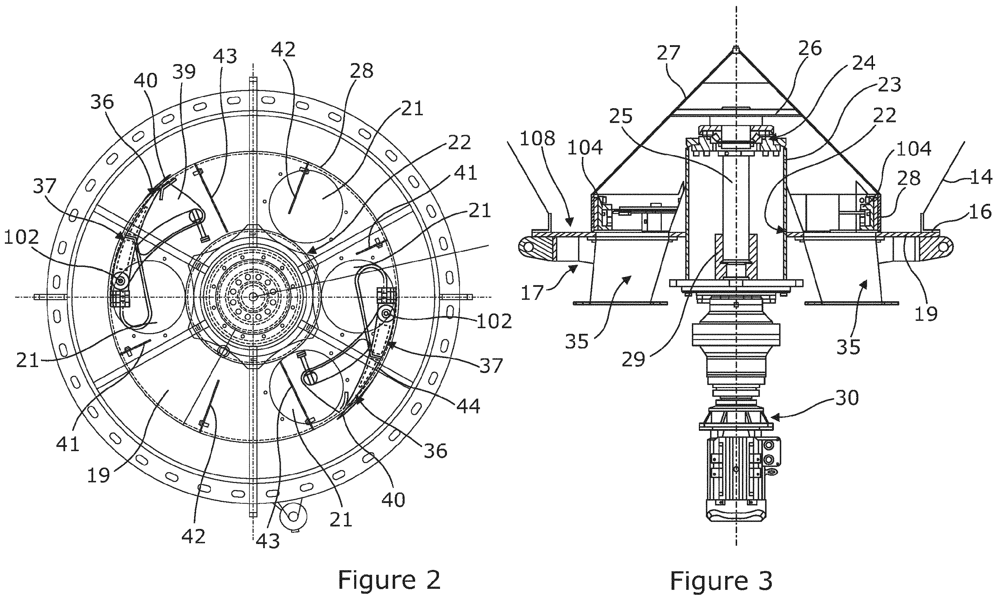

Figure 2 is a plan view of the discharge means according to an embodiment of the present invention;
Figure 3 is a section take along the line X-X of the discharge means in figure 2;
Figures 4a and 4b show detailed perspective views of arm means provided in the discharge means according to one embodiment of the present invention in an open position and a closed position respectively;
Figures 5a and 5b show detailed perspective views of arm means provided in the discharge means according to a further embodiment of the present invention in an open position and a closed position respectively;
Figures 6a and 6b show a detailed perspective view and a cross sectional view of arm means provided in the discharge means according to a yet further embodiment of the present invention in an open position; and
Figures 6c and 6d show a detailed perspective view and a cross sectional view of arm means provided in the discharge means according to a yet further embodiment of the present invention in a closed position.

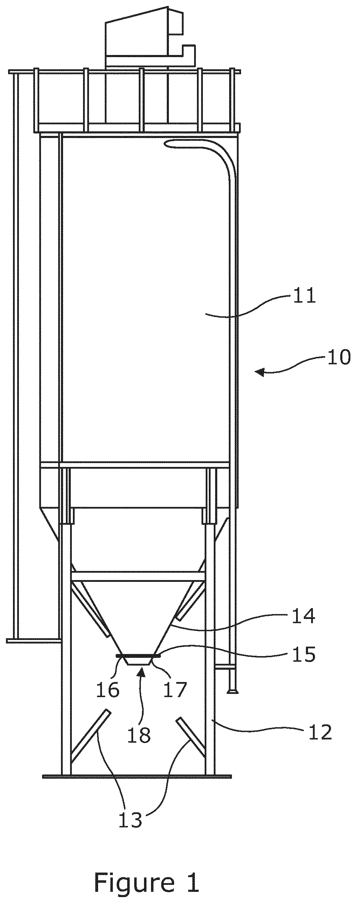

Referring to figure 1, there is illustrated discharge apparatus in the form of a silo 10 for containing one or more items or material, such as for example, grain, sand, powder, granular material, particulate material, flowable material, cement, sludge fibrous materials and/or the like. The silo 10 contains a main storage reservoir 11 which can be of any size, shape and/or design. In the illustrated example, the storage reservoir 11 is generally cylindrical in shape and is supported on support means in the form of legs 12. The legs 12 have cross braces for strength and rigidity of the support structure. A discharge portion 14 is provided at the lower end of the main storage reservoir 11 for allowing discharge of the one or more items from the storage reservoir when required. The discharge portion 14 is frusto-conical in shape in the illustration but could be any suitable as required.

An extending annular flange 15 is provided at the lower end of the discharge portion 14 and is connected to an end part 16 of discharge means 17. The discharge means 17 are for discharging the one or more items from the discharge apparatus in use.

The discharge portion 14 includes a plate 19, the outer portion of which provides the end part 16. The discharge portion 14 and the plate 19 define an entry chamber of the discharge means 17. The entry chamber is in communication with the main interior 11 of the silo 10 and of which plate 19 provides a bottom wall.

The plate 19 of the entry chamber has discharge outlets including four outer apertures 21 defined therein which are of generally circular configuration and are positioned outwardly of a central aperture 22. The discharge outlets allow the one or more items to be discharged from silo 10 in use.

Directing means are movably mounted in the entry chamber for directing the one or more items from the entry chamber to the discharge outlet apertures 21 in use. Drive means are also provided in the entry chamber for driving movement, and particularly rotation, of the directing means in use.

The drive means includes a sleeve member 23 disposed within the central aperture 22 which carries a bearing arrangement 24 at its upper end by which a central drive shaft 25 is rotatably mounted. The central shaft 25 is bolted to an intermediate plate 26 of a directing chamber or an obstructing member 27 forming part of the directing means.

The directing chamber or obstructing member 27 is of generally frusto-conical shape and has a generally cylindrical wall 28 at its lower end. The cylindrical wall 28 projects upwardly relative to the plate 19. The obstructing member 27 is rotatable relative to plate 19 in use via the drive means.

The shaft 25 is connected, at its lower end, to an output shaft 29 of an electric motor/gearbox assembly 30 forming part of the drive means.

The discharge outlet includes a passage 35 fastened to the underside surface of the plate 19 beneath each of the outer apertures 21. Each discharge passage 35 extends generally downwardly and outwardly from the plate 19 beneath the associated aperture 21. The outer apertures 21 and discharge passages 35 are provided directly below the obstructing member and within the outer perimeter of the upwardly extending wall 28. Although four outer apertures 21 are shown as being defined in plate 19 of the entry chamber. It will be appreciated that more or less outer apertures could be provided as required.

In use, one or more items or material located in the entry chamber are moved from the exterior of the directing means to the interior of the directing means via openings 36 defined in the directing means. More specifically, a pair of openings 36 are defined in the upstanding wall 28 of the directing means at opposite locations. Each opening 36 has closure means in the form of an arm member 37 associated with the same.

Each arm member 37 is pivotably mounted to a bracket 104 attached to an inner surface of the upstanding wall 28 at a first inner end 100 of arm member 37 via a pivot pin or shaft 102. The longitudinal axis of the shaft 102 is parallel to the upstanding wall 28. The arm member 37 is pivotably movable about the shaft 102 between open and closed positions in use.

In the open position, the one or more items or material can move from the exterior of the directing means through the openings 36 and into the interior of the directing means. In the closed position, the one or more items or material located in the entry chamber and externally of the directing means are prevents from moving through the openings 36 and into the interior of the directing means.

Each arm member 37 has an outwardly facing surface 44 of similar curvature to the upstanding wall 28. Each arm member 37 includes an upper wall 39 and a lip part 40 provided at a second outer end 106 of arm member 37.

In accordance with the present invention, resilient biasing means are associated with each arm member 37 to resiliently bias the arm member to the open position in use. This is particularly useful if the items or material being dispensed are of insufficient density to impart sufficient force on the arm member to reliably move it from the closed position to the open position in use. The resilient biasing means are specifically designed to impart sufficient force to the arm member to assist with opening the same when the discharge means is being operated in a first or clockwise direction but still allow generation of sufficient force to close the arm member when the discharge means is operated in a second reverse anti-clockwise direction. The resilient biasing means are also chosen to minimise any disruption to the flow of material or the generation of additional operating forces while dispensing the items or material.

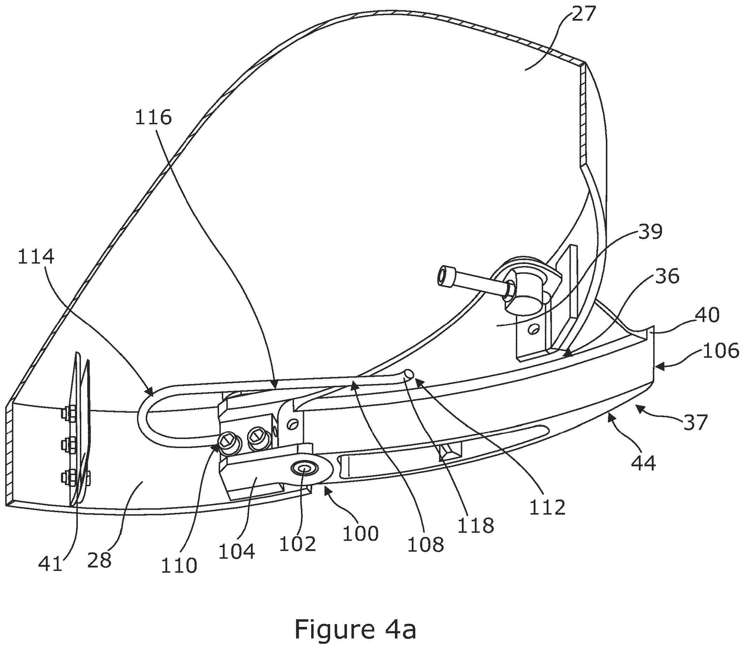

In figures 4a-4b, the resilient biasing means is in the form of a spring member 108 having a generally circular cross sectional shape. Such a spring may often be referred to as a hair pin spring. A first end 110 of the spring member 108 is fixedly connected to bracket 104. The second end 112 of the spring member 108 engages with an inner surface of arm member 37 when the arm member 37 is in the closed position and during at least the initial opening stages of the arm member 37 as it moves from the closed position to the open position.

Although the second end 112 of the spring member 108 can remain in contact with the arm member 37 during the entire process of opening and closing of the arm member with respect to the opening 36, it has been found that as long as the second end of the spring member 108 remains in contact with the arm member 37 for at least the initial opening stages of the arm member when moving from the closed position to the open position, this allows the resilient biasing means to generate sufficient biasing force on the arm member to then allow movement of the one or more items against the inner surface of the arm member to continue moving the arm member to the fully open position. Thus, when the arm member 37 is in the fully open position, the second end 112 of the spring member 108 is a spaced distance apart from the arm member 37, as shown in figure 4a.

In one example, the bracket 104 includes two clamping members with a channel defined between the same. The first end 110 of the spring member 108 is located in the channel between the clamping members. When attachment means in the form of threaded fasteners are tightened to draw the clamping members together, this firmly clamps the first end 110 of the spring member 108 between the clamping members to secure the spring member in position.

Spring member 108 has a generally curved or convex portion 114, a generally linear portion 116 and an engaging portion 118 at the second end 112. This shape of the spring member 108 is such so as to provide it with sufficient flexion to impart the necessary biasing force along the length of arm member 37 in order to open the arm member.

The spring member 108 can be retrofitted to an existing arm member 37 of a conventional dispensing system, such as the one shown in GB2377432.

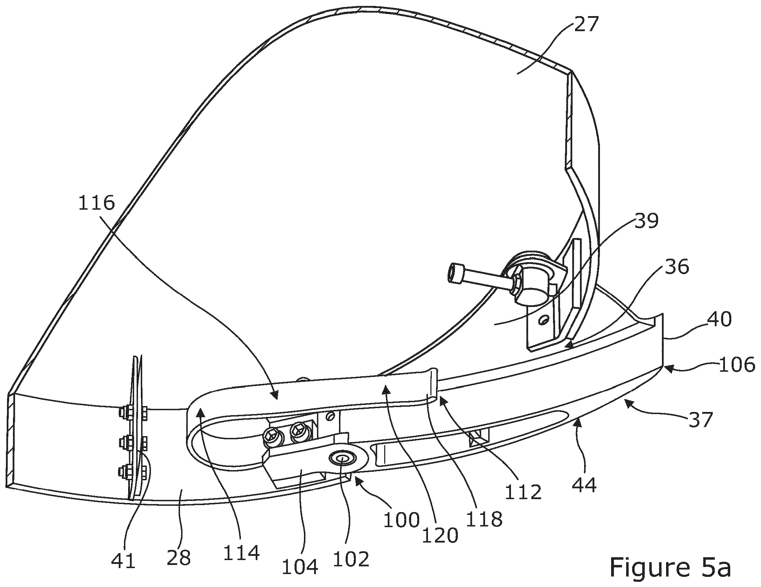

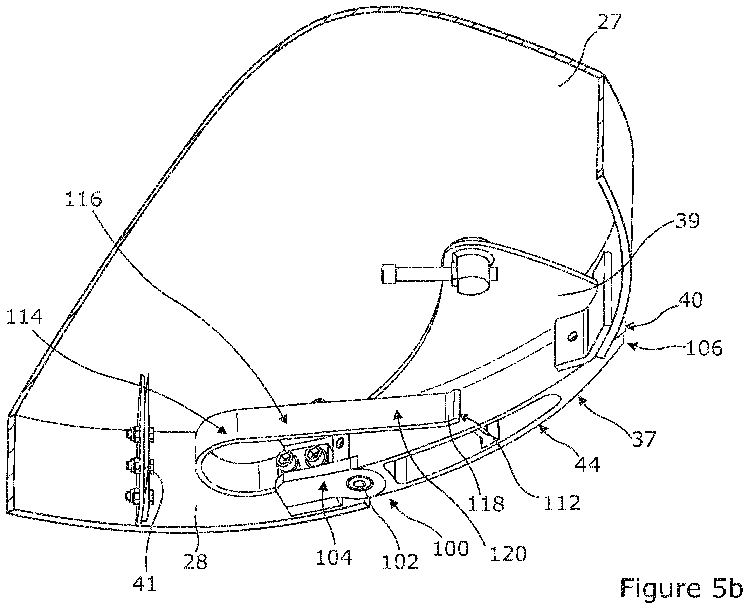

In figures 5a-5b, the resilient biasing means is in the form of a spring member 120 having a rectangular cross sectional shape. It operates in a similar manner to the spring member 108 shown in figures 4a-4b in use.

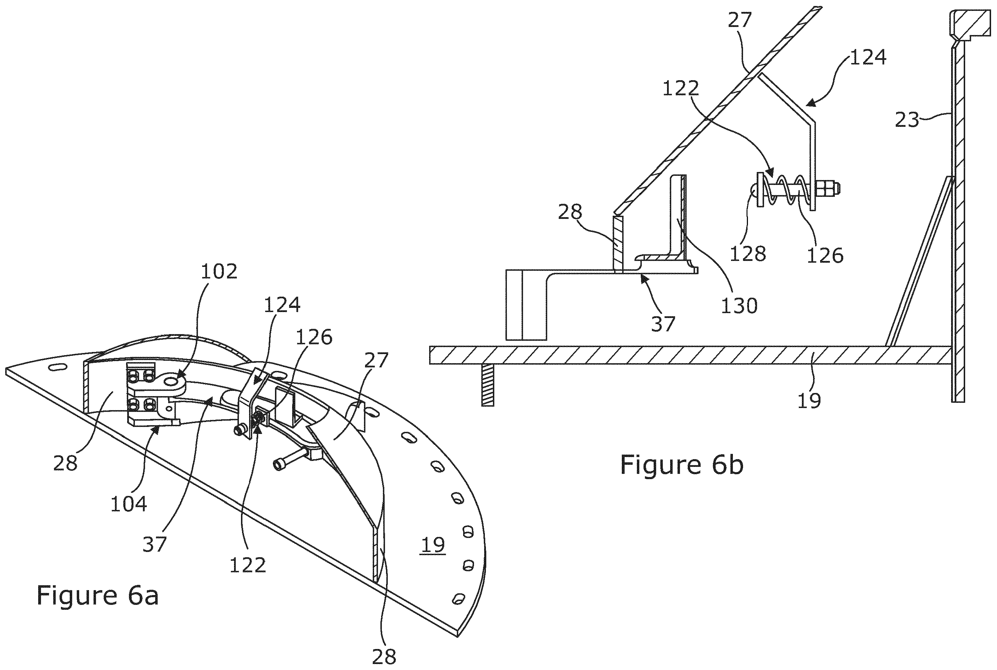

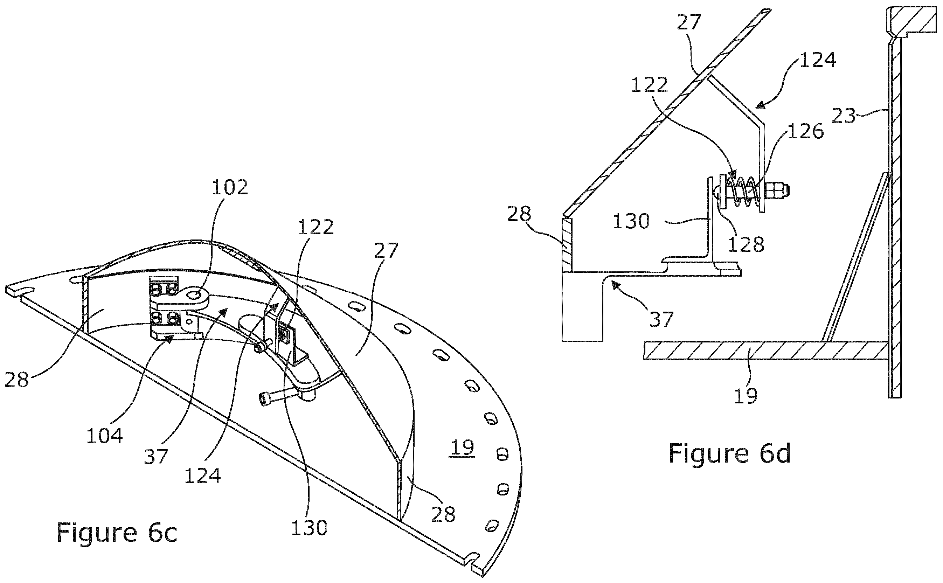

In figures 6a-6b, the resilient biasing means includes a coiled spring 122. In this embodiment, the coiled spring 122 is provided on a bracket 124 that is separate to the bracket 104 joining the arm member 37 to the upwardly extending wall 28. The bracket 124 is fixed to the interior surface of the obstructing member 27. A support member 126 is attached to bracket 124 and the coiled spring 122 is provided on the support member between the bracket 124 and an engaging portion 128. The engaging portion 128 contacts an engaging plate 130 provided on top of arm member 37.

With the arm member 37 in the closed position, the engaging portion 128 of the resilient biasing means engages with the engaging plate 130 of the arm member 37. As the obstructing member rotates in a first clockwise direction in use, the biasing force created by the spring 122 acting on engaging plate 130 helps to move the arm member 37 from the closed position to the open position, at least in the initial stages of opening of the arm member 37.

It will be appreciated by persons skilled in the art that the design of the resilient biasing means can be optimised depending on the application of use, such as for example depending on the density and/or fluidity of the material being dispensed, the size and/or operating capacity of the discharge means and/or the like. Secured to the inner surface of the upstanding wall 28 are two sets of three carrier vanes 41, 42, 43. Each set is provided between the axis of pivot (shaft 102) of arm member 37 and the next following opening 36. The carrier vane 41 is approximately one third of the length of carrier vane 43. The carrier vane 42 is approximately two thirds the length of carrier vane 43. The carrier vanes 41 are diametrically opposite each other, as are carrier vanes 42 and 43.

The carrier vanes are made of spring steel in one example in order to prevent over-compaction of product degradation in the event that the discharge passage 35 becomes obstructed or blocked.

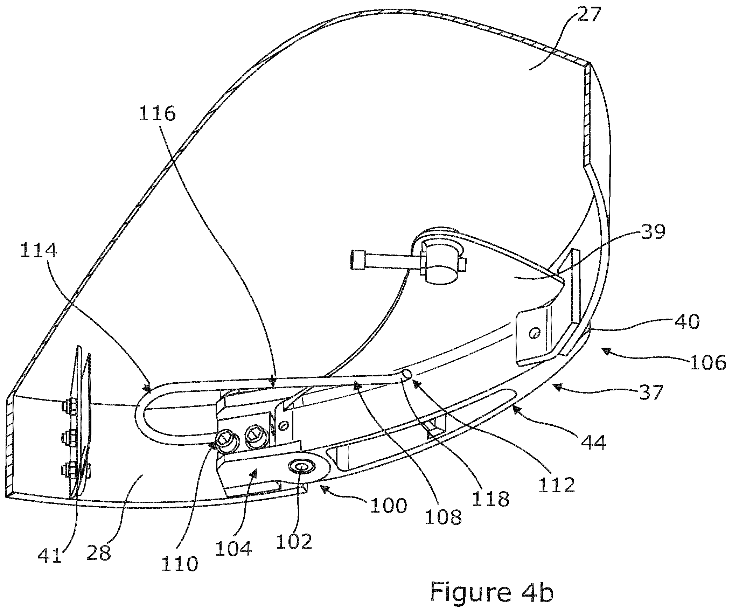

In use, when it is required to discharge material from main body 11 of the silo 10, the motor/gearbox assembly 30 is operated to rotate the shaft 25 and hence rotate obstructing member 27 and upstanding wall 28 in a first direction or clockwise manner. The lips 40 of the arm members 37 are forced against the items or material contained in the entry chamber and this helps to cause arm members 37 to be moved from a closed position, as shown in figure 4b, to an open position, as shown in figure 4a. The biasing force provided by the resilient biasing means acting on the arm member further helps to move the arm member from the closed position to the open position, as previously described. As a result, the items or material is caused to flow from an annular space 108 in the entry chamber defined between the external surface of the upstanding wall 28 and the frusto-conical discharge portion 14, along arm member 37 and through the associated opening 36. Once the items or material enter the interior of the obstructing member 27, the items or material are carried by the carrier vanes 41, 42, 43 to the discharge apertures 21 and then into the discharge passage 35. As the carrier vanes 41, 42, 43 are graduated in length, pulsation of the material/item flow is minimised because approximately one third of the item/material delivered into the entry chamber is carried by the first carrier vane 41, two thirds is carried by the second carrier vane 42 and the remainder by the full length carrier vane 43.

When it is desired to stop the flow of material/items, the direction of rotation of the motor/gearbox assembly 30 is reversed. As such, the direction of rotation of the shaft 25 and the obstructing member 27 is reversed so that it rotates in an anticlockwise direction. This causes arm members 37 to rotate about shaft 102 to cause the arm members 37 to close the openings 36, as shown in figure 4b. As the arm member 37 approaches the closed position, the resilient biasing means re-engages with the inner surface of the arm member. The force applied to the outer surface 44 of the arm members 37 by the flowable material in the space 108 of the discharge portion 14 is greater than the biasing force provided by the resilient biasing means and prevents any further material/items from flowing through the openings 36.

## Claims

1. Discharge means (17) for use in or with dispensing apparatus, said discharge means (17) including:
an entry chamber for receiving one or more items or material to be dispensed in use;
at least one discharge outlet (21) provided in the entry chamber;
directing means (27) rotatably mounted in the entry chamber for directing the one or more items or material through the at least one discharge outlet (21) in use;
at least one opening (36) defined in or associated with the directing means (27) for allowing the one or more items or material to move from an exterior of the directing means (27) through the at least one opening (36) to an interior of the directing means (27) and towards the discharge outlet (21) when the directing means (27) are moving in use;
closure means are associated with the at least one opening (36) of the directing means (27), and said closure means has a first end pivotably mounted, directly or indirectly to the directing means (27) and are arranged to move in use between an open position, wherein the one or more items or material can move through the at least one opening (36) of the directing means (27), and
a closed position, wherein the one or more items or material are prevented from moving through the at least one opening (36) of the directing means (27); **characterised in that** resilient biasing means are provided on or associated with the closure means to bias the closure means from the closed position to the open position, at least in an initial stage of opening of the closure means, in use.

2. Discharge means according to claim 1, wherein the biasing force imparted by the resilient biasing means on the closure means is such so as to generate a moment applied to the closure means proportional to approximately 3-5% of the torque or force required to rotate or move the directing means (27) in use; and/or is sufficient to allow the closure means to be movable to the open position when the directing means (27) is moved in a first direction but allow the closure means to be movable to the closed position when the directing means (27) is moved in a second direction.

3. Discharge means according to claim 1, wherein the resilient biasing means includes any or any combination of one or more members capable of providing a resilient biasing force; one or more springs, spring members (108), hair pin springs, leaf springs, spring steel, or coiled springs (122).

4. Discharge means according to claim 1, wherein the resilient biasing means includes a curved portion, convex portion (114), partial circle portion or partial loop portion, and optionally a linear or substantially linear portion (116).

5. Discharge means according to claim 4, wherein a first end (110) of the resilient biasing means is provided with the curved portion, convex portion (114), partial circle portion or partial loop portion, and said first end (110) is closest to pivot and/or bracket means (104, 124) via which the closure means is pivotably mounted and/or mounted to the directing means (27).

6. Discharge means according to claim 1, wherein an end (112) of the resilient biasing means is arranged to engage with an inwardly facing surface of the closure means.

7. Discharge means according to claim 1, wherein once the resilient biasing means has provided an initial biasing force to the closure means to start opening of the closure means, said end (112) of the resilient biasing means disengages with the closure means and the force of the one or more items or material moving against the closure means in use continues to move the closure means to the fully open position.

8. Discharge means according to claim 1, wherein drive means or a drive mechanism are provided on or associated with the directing means (27) for driving the rotation of the directing means (27) in use.

9. Discharge means according to claim 1, wherein the directing means (27) comprises a directing chamber having an upwardly extending wall or walls (28), the at least one opening (36) defined in the upwardly extending wall or walls (28), and optionally a cone portion located on top of the upwardly extending wall or walls (28).

10. Discharge means according to claim 1, wherein a second end of the closure means is arranged to project or protrude further outwardly of an axis of rotation of the directing means (27) than the first end of the closure means.

11. Discharge means according to claim 1, wherein the directing means (27) is provided with one or more carrier vanes (41, 42, 43) to help carry the one or more items or material in the interior of the directing means (27) towards the at least one dispensing outlet (21) in use.

12. Dispensing apparatus including discharge means (17) according to claim 1, wherein the dispensing apparatus includes a silo (10), hopper, or storage reservoir.

13. A method of using discharge means (17), said discharge means (17) including:
an entry chamber for receiving one or more items or material to be dispensed in use;
at least one discharge outlet (21) provided in the entry chamber;
directing means (27) rotatably mounted in the entry chamber;
at least one opening (36) defined in or associated with the directing means (27);
closure means are associated with the at least one opening (36) of the directing means (27); said closure means has a first end pivotably mounted, directly or indirectly, to the directing means (27);
said method including the steps of
moving the directing means (27) to move and direct the one or more items or material from an exterior of the directing means (27) to an interior of the directing means (27) through the at least one opening (36) and towards the discharge outlet (21) in use;
moving the closure means between an open position, wherein the one or more items or material can move through the at least one opening (36) of the directing means (27), and a closed position, wherein the one or more items or material are prevented from moving through the at least one opening (36) of the directing means (27); **characterised in that** resilient biasing means are provided on or associated with the closure means to bias the closure means from the closed position to the open position, at least in an initial stage of opening of the closure means, in use.

14. The method according to claim 13, wherein the material to be dispensed is or includes any or any combination of flowable material, a powder, granular material, particulate material, grain, cement, chemicals, animal feed, sand, soil, calcium carbonate, chalk, silicate material, or flowable material having a density equal to or less than 300Kg/m³.

## Patentansprüche

1. Austragsmittel (17) zur Verwendung in oder mit einer Abgabevorrichtung, wobei das genannte Austragsmittel (17) Folgendes umfasst:
eine Eintrittskammer zum Aufnehmen von einem oder mehreren Gegenständen oder Material, die bzw. das im Gebrauch abzugeben ist bzw. sind;
mindestens einen Austragsauslass (21), der in der Eintrittskammer bereitgestellt ist;
Leitmittel (27), die bewegbar in der Eintrittskammer montiert sind zum Leiten des einen oder der mehreren Gegenstände oder des Materials im Gebrauch durch den mindestens einen Austragsauslass (21);
mindestens eine Öffnung (36), die in dem Leitmittel (27) definiert oder diesem zugeordnet ist, um zu ermöglichen, dass sich der eine oder die mehreren Gegenstände oder das Material von einem Äußeren des Leitmittels (27) durch die mindestens eine Öffnung (36) zu einem Inneren des Leitmittels (27) und in Richtung auf den Abgabeauslass (21) bewegen, wenn das Leitmittel (27) sich im Gebrauch bewegt;
Verschlussmittel sind der mindestens einen Öffnung (36) des Leitmittels (27) zugeordnet und das genannte Verschlussmittel weist ein erstes Ende auf, das direkt oder indirekt schwenkbar an dem Leitmittel (27) montiert ist, und sind zum Bewegen im Gebrauch zwischen einer offenen Stellung, bei der der eine oder die mehreren Gegenstände oder das Material sich durch die mindestens eine Öffnung (36) des Leitmittels (27) bewegen können, und einer geschlossenen Stellung, bei der verhindert wird, dass sich der eine oder die mehreren Gegenstände oder das Material durch die mindestens eine Öffnung (36) des Leitmittels (27) bewegen; **dadurch gekennzeichnet, dass** federnde Vorspannmittel an den Verschlussmitteln bereitgestellt oder diesen zugeordnet sind, um die Verschlussmittel aus der geschlossenen Stellung zur offenen Stellung vorzuspannen, zumindest in einer anfänglichen Öffnungsphase der Verschlussmittel im Gebrauch.

2. Austragsmittel nach Anspruch 1, wobei die durch das federnde Vorspannmittel auf das Verschlussmittel ausgeübte Vorspannkraft so ist, dass sie ein auf das Verschlussmittel angewendetes Moment auf etwa 3 - 5 % des Drehmoments oder der Kraft erzeugt, die zum Drehen oder Bewegen des Leitmittels (27) im Gebrauch erforderlich ist;
und/oder ausreicht, um zu ermöglichen, dass das Verschlussmittel in die offene Stellung bewegbar ist, wenn das Leitmittel (27) in einer ersten Richtung bewegt wird, aber ermöglicht, dass das Verschlussmittel in die geschlossene Stellung bewegbar ist, wenn das Leitmittel (27) in einer zweiten Richtung bewegt wird.

3. Austragsmittel nach Anspruch 1, wobei das federnde Vorspannmittel ein beliebiges von oder eine beliebige Kombination aus einem oder mehreren Elementen, die eine federnde Vorspannkraft bereitstellen können; einer oder mehreren Federn, Federelementen (108), Haarnadelfedern, Blattfedern, Federstahl oder Sprungfedern (122) umfasst.

4. Austragsmittel nach Anspruch 1, wobei das federnde Vorspannmittel einen gekrümmten Teil, einen konvexen Teil, einen teilkreisförmigen Teil oder teilschleifenförmigen Teil und wahlweise einen linearen oder im Wesentlichen linearen Teil (116) umfasst.

5. Austragsmittel nach Anspruch 4, wobei ein erstes Ende (110) des federnden Vorspannmittels mit dem gekrümmten Teil, dem konvexen Teil (114), dem teilkreisförmigen Teil oder dem teilschleifenförmigen Teil versehen ist und das genannte erste Ende (110) einem Schwenk- und/oder Halterungsmittel (104, 124) am nächsten ist, über das das Verschlussmittel schwenkbar montiert ist und/oder an dem Leitmittel (27) montiert ist.

6. Austragsmittel nach Anspruch 1, wobei ein Ende (112) des federnden Vorspannmittels für Eingriff mit einer nach innen gerichteten Oberfläche des Verschlussmittels angeordnet ist.

7. Austragsmittel nach Anspruch 1, wobei, sobald das federnde Vorspannmittel eine anfängliche Vorspannkraft auf das Verschlussmittel aufgebracht hat, um das Öffnen des Verschlussmittels beginnen zu lassen, das genannte Ende (112) des federnden Vorspannmittels außer Eingriff mit dem Verschlussmittel kommt und die Kraft des einen oder der mehreren Gegenstände oder des Materials, das bzw. die sich im Gebrauch gegen das Verschlussmittel bewegen, das Verschlussmittel weiter in die ganz offene Stellung bewegt.

8. Austragsmittel nach Anspruch 1, wobei Antriebsmittel oder ein Antriebsmechanismus zum Antreiben der Drehung des Leitmittels (27) im Gebrauch an dem Leitmittel (27) bereitgestellt oder diesen zugeordnet ist bzw. sind.

9. Austragsmittel nach Anspruch 1, wobei das Leitmittel (27) eine Leitkammer mit (einer) sich nach oben erstreckenden Wand oder Wänden (28), wobei die mindestens eine Öffnung (36) in der bzw. den sich nach oben erstreckenden Wand oder Wänden definiert ist, und wahlweise einen Kegelteil, der sich oben auf der bzw. den sich nach oben erstreckenden Wand oder Wänden (28) befindet, aufweist.

10. Austragsmittel nach Anspruch 1, wobei ein zweites Ende des Verschlussmittels so angeordnet ist, dass es zu einer Drehachse des Leitmittels (27) weiter nach außen vorsteht oder ragt als das erste Ende des Verschlussmittels.

11. Austragsmittel nach Anspruch 1, wobei das Leitmittel (27) mit einem oder mehreren Trägerflügeln (41, 42, 43) zum Unterstützen des Beförderns des einen oder der mehreren Gegenstände oder des Materials im Inneren des Leitmittels (27) im Gebrauch zu dem mindestens einen Abgabeauslass (21) hin versehen ist.

12. Abgabevorrichtung mit einem Austragsmittel (17) nach Anspruch 1, wobei die Abgabevorrichtung ein Silo (10), einen Trichter oder ein Vorratsbehältnis umfasst.

13. Verfahren zur Verwendung eines Austragsmittels (17), wobei das genannte Austragsmittel (17) Folgendes umfasst:
eine Eintrittskammer zum Aufnehmen von einem oder mehreren Gegenständen oder Material, die bzw. das im Gebrauch abzugeben ist bzw. sind;
mindestens einen Austragsauslass (21), der in der Eintrittskammer bereitgestellt ist;
ein Leitmittel (27), das bewegbar in der Eintrittskammer montiert ist;
mindestens eine Öffnung (36), die in dem Leitmittel (27) definiert oder diesem zugeordnet ist,
Verschlussmittel sind der mindestens einen Öffnung (36) des Leitmittels (27) zugeordnet; wobei das genannte Verschlussmittel ein erstes Ende aufweist, das direkt oder indirekt schwenkbar an dem Leitmittel (27) montiert ist;
wobei das genannte Verfahren die folgenden Schritte umfasst:
Bewegen des Leitmittels (27) zum Bewegen und Leiten des einen oder der mehreren Gegenstände oder des Materials im Gebrauch von einem Äußeren des Leitmittels (27) zu einem Inneren des Leitmittels (27) durch die mindestens eine Öffnung (36) und hin zu dem Austragsauslass (31);
Bewegen des Verschlussmittels zwischen einer offenen Stellung, bei der der eine oder die mehreren Gegenstände oder das Material sich durch die mindestens eine Öffnung (36) des Leitmittels (27) bewegen können, und einer geschlossenen Stellung, bei der verhindert wird, dass sich der eine oder die mehreren Gegenstände oder das Material durch die mindestens eine Öffnung (36) des Leitmittels (27) bewegen; **dadurch gekennzeichnet, dass** federnde Vorspannmittel an den Verschlussmitteln bereitgestellt oder diesen zugeordnet sind, um die Verschlussmittel aus der geschlossenen Stellung zur offenen Stellung vorzuspannen, zumindest in einer anfänglichen Öffnungsphase der Verschlussmittel im Gebrauch.

14. Verfahren nach Anspruch 13, wobei das abzugebende Material eines von oder eine beliebige Kombination aus fließfähigem Material, einem Pulver, einem Granulat, einem Feststoff, Getreide, Zement, Chemikalien, Tierfutter, Sand, Boden, Calciumcarbonat, Kalk, Silikatmaterial oder fließfähiges Material mit einer Dichte, die kleiner oder gleich 300 kg/m³ ist, umfasst.

## Revendications

1. Moyen d'évacuation (17) pour une utilisation dans ou avec un appareil de distribution, ledit moyen d'évacuation (17) incluant :
une chambre d'entrée pour recevoir un ou plusieurs articles ou matériaux devant être distribués lors de l'utilisation ;
au moins une sortie d'évacuation (21) prévue dans la chambre d'entrée ;
des moyens de direction (27) montés de manière rotative dans la chambre d'entrée pour diriger les un ou plusieurs articles ou matériaux à travers l'au moins une sortie d'évacuation (21) lors de l'utilisation ;
au moins une ouverture (36) définie dans ou associée aux moyens de direction (27) pour permettre aux un ou plusieurs articles ou matériaux de passer depuis un espace extérieur des moyens de direction (27) à travers l'au moins une ouverture (36) jusqu'à un espace intérieur des moyens de direction (27) et vers la sortie d'évacuation (21) lorsque les moyens de direction (27) sont déplacés lors de l'utilisation ;
des moyens de fermeture sont associés à l'au moins une ouverture (36) des moyens de direction (27), et lesdits moyens de fermeture ont une première extrémité qui est montée de manière pivotante, directement ou indirectement, sur les moyens de direction (27) et sont agencés pour se déplacer lors de l'utilisation entre une position ouverte, dans laquelle les un ou plusieurs articles ou matériaux peuvent passer à travers l'au moins une ouverture (36) des moyens de direction (27), et une position fermée, dans laquelle les un ou plusieurs articles ou matériaux sont empêchés de passer à travers l'au moins une ouverture (36) des moyens de direction (27) ; **caractérisé en ce que** des moyens de sollicitation élastiques sont prévus sur ou associés aux moyens de fermeture pour solliciter les moyens de fermeture depuis la position fermée jusqu'à la position ouverte, au moins dans une étape initiale de l'ouverture des moyens de fermeture, lors de l'utilisation.

2. Moyen d'évacuation selon la revendication 1, dans lequel la force de sollicitation induite par les moyens de sollicitation élastiques sur les moyens de fermeture est telle qu'elle génère un moment appliqué aux moyens de fermeture de manière proportionnelle à environ 3-5 % du couple ou de la force requis/e pour faire tourner ou déplacer les moyens de direction (27) lors de l'utilisation ; et/ou est suffisante pour permettre aux moyens de fermeture de pouvoir bouger jusqu'à la position ouverte lorsque les moyens de direction (27) sont déplacés dans un premier sens mais permet aux moyens de fermeture de pouvoir bouger jusqu'à la position fermée lorsque les moyens de direction (27) sont déplacés dans un deuxième sens.

3. Moyen d'évacuation selon la revendication 1, dans lequel les moyens de sollicitation élastiques incluent n'importe quel élément ou n'importe quelle combinaison d'un ou de plusieurs éléments aptes à fournir une force de sollicitation élastique ; un ou plusieurs ressorts, éléments à ressort (108), ressorts en épingle à cheveux, ressorts à lames, acier à ressort, ou ressorts hélicoïdaux (122).

4. Moyen d'évacuation selon la revendication 1, dans lequel les moyens de sollicitation élastiques incluent une portion incurvée, une portion convexe (114), une portion en cercle partiel ou une portion en boucle partielle, et facultativement une portion linéaire ou substantiellement linéaire (116).

5. Moyen d'évacuation selon la revendication 4, dans lequel une première extrémité (110) des moyens de sollicitation élastiques est dotée de la portion incurvée, de la portion convexe (114), de la portion en cercle partiel ou de la portion en boucle partielle, et ladite première extrémité (110) est la plus proche des moyens à pivot et/ou à console (104, 124) par l'intermédiaire desquels les moyens de fermeture sont montés de manière pivotante et/ou montés sur les moyens de direction (27).

6. Moyen d'évacuation selon la revendication 1, dans lequel une extrémité (112) des moyens de sollicitation élastiques est agencée pour se mettre en prise avec une surface orientée vers l'intérieur des moyens de fermeture.

7. Moyen d'évacuation selon la revendication 1, dans lequel une fois que les moyens de sollicitation élastiques ont fourni une force de sollicitation initiale aux moyens de fermeture pour commencer l'ouverture des moyens de fermeture, ladite extrémité (112) des moyens de sollicitation élastiques se met hors de prise avec les moyens de fermeture, et la force des un ou plusieurs articles ou matériaux se déplaçant contre les moyens de fermeture, lors de l'utilisation, continue de déplacer les moyens de fermeture jusqu'à la position entièrement ouverte.

8. Moyen d'évacuation selon la revendication 1, dans lequel des moyens d'entraînement ou un mécanisme d'entraînement sont prévus sur ou sont associés aux moyens de direction (27) pour entraîner la rotation des moyens de direction (27) lors de l'utilisation.

9. Moyen d'évacuation selon la revendication 1, dans lequel les moyens de direction (27) comprennent une chambre de direction ayant une paroi ou des parois s'étendant vers le haut (28), l'au moins une ouverture (36) étant définie dans la paroi ou les parois s'étendant vers le haut (28), et facultativement une portion en cône est localisée sur le haut de la paroi ou des parois s'étendant vers le haut (28).

10. Moyen d'évacuation selon la revendication 1, dans lequel une deuxième extrémité des moyens de fermeture est agencée pour dépasser ou faire davantage saillie vers l'extérieur d'un axe de rotation des moyens de direction (27) que la première extrémité des moyens de fermeture.

11. Moyen d'évacuation selon la revendication 1, dans lequel les moyens de direction (27) sont dotés d'une ou de plusieurs aubes de transport (41, 42, 43) pour aider à transporter les un ou plusieurs articles ou matériaux dans l'espace intérieur des moyens de direction (27) vers l'au moins une sortie de distribution (21) lors de l'utilisation.

12. Appareil de distribution incluant un moyen d'évacuation (17) selon la revendication 1, l'appareil de distribution incluant un silo (10), une trémie, ou un réservoir de stockage.

13. Procédé d'utilisation d'un moyen d'évacuation (17), ledit moyen d'évacuation incluant :
une chambre d'entrée pour recevoir un ou plusieurs articles ou matériaux devant être distribués lors de l'utilisation ;
au moins une sortie d'évacuation (21) prévue dans la chambre d'entrée ;
des moyens de direction (27) montés de manière rotative dans la chambre d'entrée ;
au moins une ouverture (36) définie dans ou associée aux moyens de direction (27) ;
des moyens de fermeture sont associés à l'au moins une ouverture (36) des moyens de direction (27) ; lesdits moyens de fermeture ont une première extrémité qui est montée de manière pivotante, directement ou indirectement, sur les moyens de direction (27) ;
ledit procédé incluant les étapes consistant à :
faire bouger les moyens de direction (27) pour déplacer et diriger les un ou plusieurs articles ou matériaux depuis un espace extérieur des moyens de direction (27) jusqu'à un espace intérieur des moyens de direction (27) à travers l'au moins une ouverture (36) et vers la sortie d'évacuation (21) lors de l'utilisation ;
faire bouger les moyens de fermeture entre une position ouverte, dans laquelle les un ou plusieurs articles ou matériaux peuvent passer à travers l'au moins une ouverture (36) des moyens de direction (27), et une position fermée, dans laquelle les un ou plusieurs articles ou matériaux sont empêchés de passer à travers l'au moins une ouverture (36) des moyens de direction (27) ; **caractérisé en ce que** des moyens de sollicitation élastiques sont prévus sur ou associés aux moyens de fermeture pour solliciter les moyens de fermeture depuis la position fermée jusqu'à la position ouverte, au moins dans une étape initiale de l'ouverture des moyens de fermeture, lors de l'utilisation

14. Procédé selon la revendication 13, dans lequel le matériau devant être distribué est ou inclut n'importe quel produit ou n'importe quelle combinaison de produits parmi un matériau fluable, une poudre, un matériau granulaire, un matériau particulaire, des grains, du ciment, des agents chimiques, des aliments pour animaux, du sable, du sol, du carbonate de calcium, de la craie, du matériau silicate, ou un matériau fluable ayant une densité égale à ou inférieure à 300 kg/m³.
